# EUROPÄISCHE PATENTSCHRIFT

(11) **EP 2 277 671 B1**
(45) Veröffentlichungstag und Bekanntmachung des Hinweises auf die Patenterteilung: **28.09.2011**
(21) Anmeldenummer: 10004472.6
(22) Anmeldetag: 28.04.2010
(51) Int. Cl.: B25J 15/04

(54) **Verfahren und Vorrichtung zum Wechseln von Fräsern an einem Industrieroboter**
Method and device for changing millers on an industrial robot
Procédé et dispositif de changement de fraises sur un robot industriel

(30) Priorität: 21.07.2009 DE 102009034275
(43) Veröffentlichungstag der Anmeldung: 26.01.2011
(73) Patentinhaber: Georg Prinzing GmbH & Co. KG, 89143 Blaubeuren (DE)
(72) Erfinder: Kraiß, Richard, 89150 Laichingen (DE)
(74) Vertreter: Vogler, Bernd

(56) Entgegenhaltungen:
- FR-A1- 2 554 043
- GB-A- 2 232 956
- JP-A- 6 190 616
- JP-A- 2006 015 429
- US-A1- 2005 119 096

## Beschreibung

Die Erfindung bezieht sich auf ein Verfahren zum Wechseln von Fräsern an einem Industrieroboter. Industrieroboter werden in der Industrie in vielfältiger Weise eingesetzt. Zum Beispiel zum Handhaben von Teilen, zum Schweißen, zum Lackieren und in letzter Zeit auch zum Bearbeiten von Werkstücken aller Art. Als Bearbeitungswerkzeug werden hierzu Fräser eingesetzt. Da verschiedene Fräser für das selbe Werkstück benötigt werden ist es erforderlich, dass die Fräser automatisch gewechselt werden. Hierzu gibt es entsprechende Wechseleinrichtungen.

Bei bekannten Wechseleinrichtungen wird der Fräser mit samt dem Antriebsmotor gewechselt, das heißt bei jedem Wechsel müssen auch die Elektro- bzw. Hydraulikleitungen abgekoppelt werden. Dies ist aufwändig und störanfällig.

Bei anderen bekannten Wechseleinrichtungen erfolgt die Zentrierung beim Ankoppelvorgang über einen nicht selbsthemmenden Kegel. Damit eine feste Verbindung entsteht ist innerhalb der Wechseleinrichtung eine Verriegelung vorhanden, die die Kegelverbindung zusammenzieht. Außerdem sind zusätzliche Zentrierstifte oder Nocken vorhanden, die eine genaue Winkelposition der koppelbaren Teile sicherstellt. Die bekannten Einrichtungen sind kompliziert und deshalb aufwändig in der Herstellung. Außerdem werden hohe Ansprüche an die Umgebung gestellt, um ein Verschmutzen der Werkzeugwechselsysteme zu verhindern. Schon bei geringsten Verschmutzungen ist die Funktion dieser bekannten Werkzeugwechsel nicht mehr gegeben.

Dokument JP 2006 015 429 offenbart ein Verfahren und eine Vorrichtung nach dem Oberbegriff der Ansprüche 1 und 7.

Der Erfindung liegt die Aufgabe zu Grunde, ein Verfahren der Eingangs genannten Art zu schaffen, das es ermöglicht, dass der Antriebsmotor des Fräsers nicht gewechselt werden muss, sondern nur die Fräser, dass der Werkzeugwechsel bei beliebiger Drehwinkelstellung erfolgt, und dass nach dem Drehantrieb vom Roboter aus keine zusätzlichen Verriegelungsfunktionen gesteuert werden müssen, da das Abdrücken des Fräsers durch eine externe Kraft erfolgt. Das Verfahren und die dazu gehörige Vorrichtung ist in ihrem Aufbau sehr einfach und hundertprozentig funktionssicher. Eine Verschmutzung wird durch die Anordnung der Wechseleinrichtung und des Magazins weitgehend verhindert. Außerdem ist die Verbindung bei geringer Verschmutzung durch Staub nicht empfindlich.

Die Erfindung bezieht sich ferner auf eine Vorrichtung zum Wechseln von Fräser an Industrieroboter. Das Fräsermagazin ist hierbei stationär angeordnet. Wobei die Kegelbohrungen der Fräser unten offen und oben zu sind, so dass eine Verschmutzung der Kegelbohrungen nicht möglich ist. Das Ankuppeln der selbsthemmenden Kegelverbindung erfolgt durch die Kraft des Industrieroboters in beliebiger Winkeleinstellung des Drehantriebes. Das Lösen und Abkoppeln des Fräsers vom Roboter erfolgt hydraulisch durch Herausdrücken des Kegelzapfens mit geringem Hub. Die vollautomatisch arbeitende Fräserwechselvorrichtung ist in ihrem Aufbau sehr einfach und dadurch kostengünstig. Auch die Funktionsweise ist äußerst einfach, so dass ein störungsfreier unkomplizierter automatischer Ablauf gewährleistet ist.

Weitere Einzelheiten und Vorteile der Erfindung ergeben sich aus der nachfolgenden Beschreibung:
Der vollständige Wortlaut der Ansprüche ist vorstehend allein zur Vermeidung unnötiger Wiederholungen nicht wiedergegeben, sondern statt dessen lediglich durch Nennung der Anspruchsnummer darauf Bezug genommen wodurch jedoch alle diese Anspruchsmerkmale als an dieser Stelle ausdrücklich und als erfindungswesentlich zu gelten haben. Dabei sind alle in der vorstehenden und folgenden Beschreibung erwähnten Merkmale, wie auch die allein aus der Zeichnung entnehmbaren Merkmale, weitere Bestandteile der Erfindung, auch wenn sie nicht besonders hervorgehoben und insbesondere nicht in den Ansprüchen erwähnt sind.

Die Erfindung ist nachfolgend anhand von den in den Zeichnungen gezeigten Ausführungsbeispielen näher erläutert. Es zeigt:

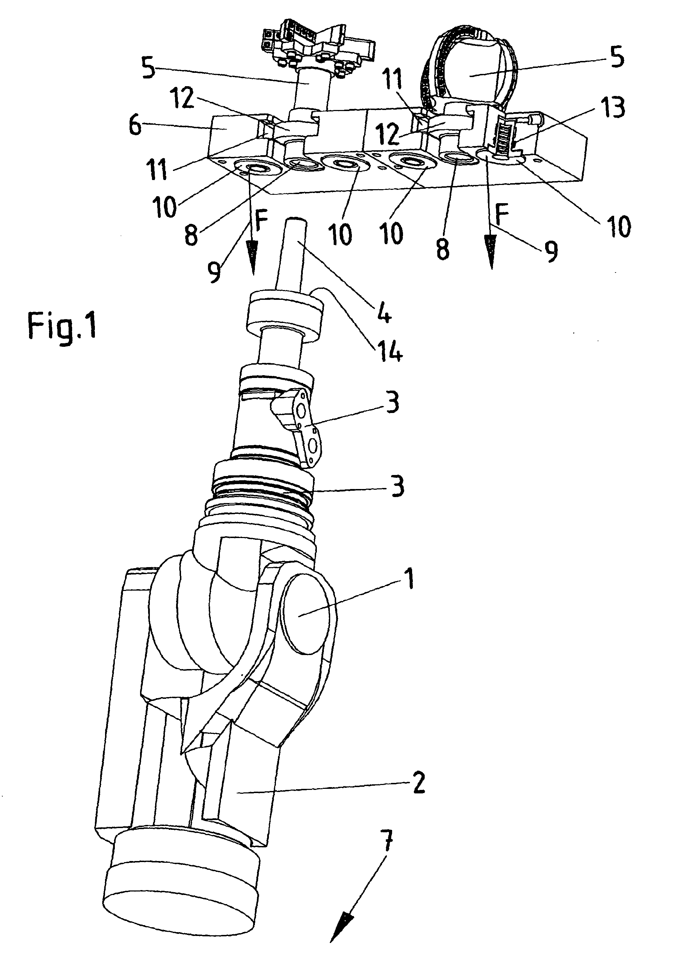

- Figur 1: Schematische dreidimensionale Darstellung folgender Teile: Das Ende eines Roboterarmes (2) mit der Schwenkachse (1) darauf angeordnet der Drehantrieb (3) für den Fräser (5) und der Kegelzapfen (4). Das Magazin (6) befindet sich beim Wechselvorgang über dem Kegelzapfen (4) und es befinden sich zwei Fräser (5) im Magazin (6).

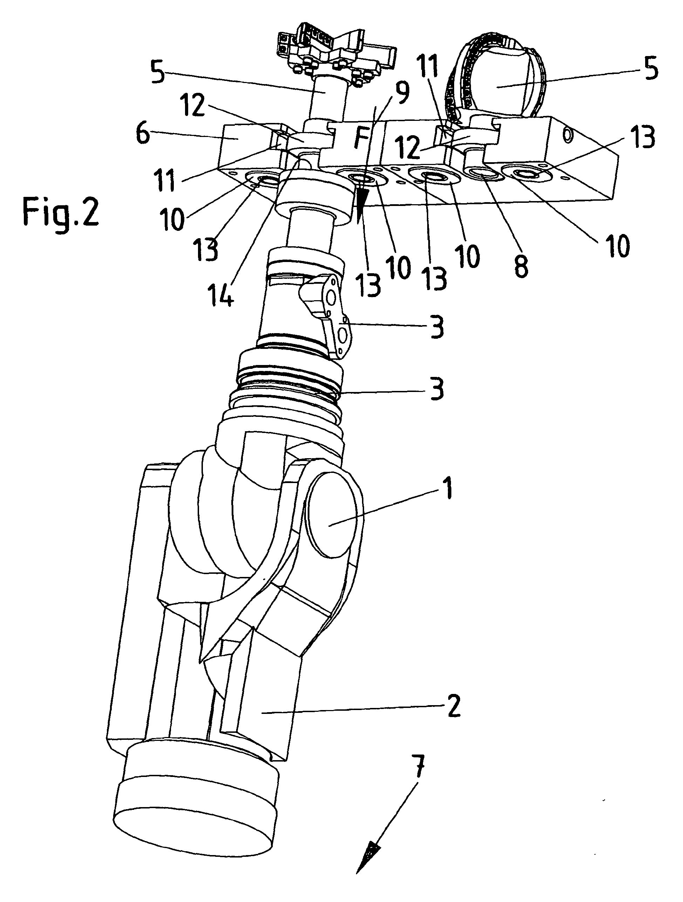

- Figur 2: in dieser Position wird der Fräser (5) angekoppelt durch das Hineindrücken des Kegelzapfens (4) in die Kegelbohrung (8). Beziehungsweise wird der Fräser (5) abgekoppelt in dem die Abdrückvorrichtung (13) auf die Kreisringfläche (14) drückt

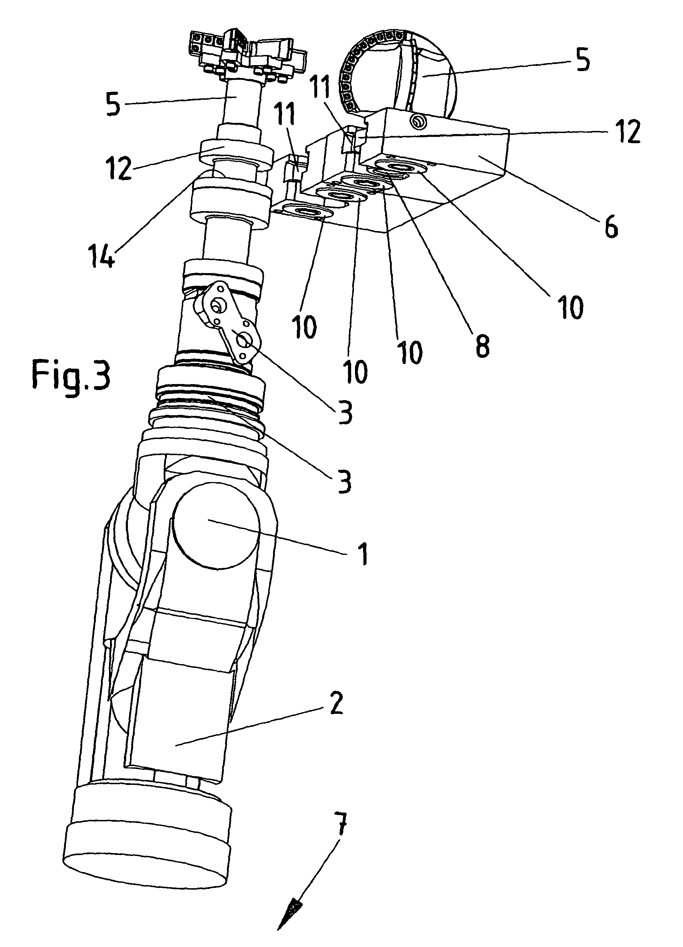

- Figur 3: Vor dem An- und Abkoppeln des Fräsers (5) wird der Fräser (5) horizontal in das Magazin (6) eingefahren und in der Nut (11) formschlüssig gehalten. In dieser genau definierten Position erfolgt das An- und Abkoppeln vom Industrieroboter (7).

Gemäß Anspruch 1 handelt es sich um ein neues Verfahren bei dem das vollautomatische Wechseln von Fräsern (5) an einem Industrieroboter (7) erfolgt. Üblicherweise hat ein Industrieroboter (7) der in den Figuren nicht weiter gezeigt wird mehrere elektrisch betriebene Achsen. Auf der letzten Schwenkachse (1) des Industrieroboters (7) befindet sich die Drehachse (3) für den Fräser. Auf dieser Drehachse (3) ist der Kegelzapfen (4) angeordnet. Es ist nur ein Kegelzapfen (4) vorhanden, der fest mit dem Drehantrieb (3) verbunden ist. Es sind mindestens zwei Fräser (5) vorhanden. Hierbei handelt es sich um rotierende Werkzeuge mit Schneiden zum Antragen von Material wie zum Beispiel Fräser, Sägeblätter und Bohrer. Diese Fräser (5) werden in einem Magazin (6) gelagert. Dabei bewegt der Roboterarm (2) den Fräser (5) mit dem Bund (12) in etwa horizontal in die Nut (11) hinein. In einer relativ genau definierten Position wird der Kegelzapfen (4) durch eine Kraft, die vom Magazin (6) ausgeht, gelöst und der Roboterarm (2) kann den nächsten Fräser (5) übernehmen.

Gemäß Anspruch 2 wird der Kegelzapfen (4) aus der Kegelbohrung (8) nach unten heraus gefahren. Dies bedeutet, dass die Kegelbohrung (8) unten offen ist und somit nicht durch herabfallenden Staub und Verunreinigungen verschmutzt werden kann.

Gemäß Anspruch 3 wird der Drehantrieb (3) und damit der Fräser (5) elektrisch und/oder hydraulisch angetrieben. Der Roboter (7) hat standardmäßig bereits an der Schwenkachse (1) einen elektrischen Antrieb (3), der rotierend betrieben werden kann. Mit diesem elektrischen Antrieb (3) kann direkt der Fräser betrieben werden.

Zusätzlich besteht die Möglichkeit auf diesem elektrischen Antrieb einen hydraulischen Motor (3) zu befestigen, so dass entweder nur hydraulisch gefräst wird oder, das beide Antriebe arbeiten und man somit eine wesentliche Erhöhung der Drehzahl des Fräsers (5) erreichen kann. Beim Einstecken des Kegelzapfens (4) in die Kegelbohrung (8) muss kein Drehwinkel des Kegelzapfens (4) beachtet werden, was die Funktionsweise und Einfachheit der ganzen Vorrichtung wesentlich verbessert.

Gemäß Anspruch 4 erfolgt die Übergabe des Fräsers (5) in das Magazin (6) horizontal, so dass eine formschlüssige Verbindung zwischen dem Fräser (5) und dem Magazin (6) entsteht und somit der Kegelzapfen (4) nach unten herausgedrückt werden kann. Dies ist ein unkomplizierter Vorgang und es werden keinerlei sonstigen Haltefunktionen für die Fräser (5) im Magazin (6) benötigt.

Gemäß Anspruch 5 ist die Kegelverbindung selbsthemmend. Dies bedeutet, dass durch das Eindrücken des Kegelzapfens (4) in die Kegelbohrung (8) die Kraft des Roboterarmes (2) ausreicht, um eine feste Verbindung zu erzielen. Zusätzlich können am Magazin (6) zusätzliche Hydraulikzylinder angeordnet werden, die das Eindrücken noch hydraulisch unterstützen, so dass ein absolut fester Sitz entsteht. Diese zusätzlichen Hydraulikzylinder sind gegenüber der jetzigen Hydraulikzylinder (13) angeordnet und drücken auf die gegenüber liegende Ringfläche von Ringfläche (14).

Gemäß Anspruch 6 ist der Fräser (5) mit Bund (11) und Kegelbohrung (8) rotationssymmetrisch, so dass beim Wechseln keine Drehwinkellage beachtet werden muss.

In dem Hauptanspruch für die Vorrichtung gemäß Anspruch 7 ist dargelegt, dass auf der Schwenkachse (1) des Roboterarmes (2) ein elektrischer und/oder hydraulischer Drehantrieb (3) angeordnet ist. Die Abtriebswelle dieser Antriebe besteht aus einem Kegelzapfen (4). Es sind mindestens zwei Fräswerkzeuge mit dazu entsprechen Kegelbohrungen (8) sowie ein Magazin zur Aufnahme von mindestens zwei Fräsern (5) vorhanden. Die Abdrückvorrichtung (10) für die Fräser (5) sind am Magazin (6) angeordnet.

Gemäß Anspruch 8 hat das Magazin (6) für jeden Fräser (5) eine Nut (11). Die Fräser (5) werden mit ihrem Bund (12) horizontal in die Nut (11) eingeschoben mit entsprechender Spielpassung und sind dann positionsgenau im Magazin (6) gelagert.

Gemäß Anspruch 9 ist dargelegt, dass die Abdrückvorrichtungen (10) aus hydraulischen Abdrückzylindern (13) gebildet ist. Die Hydraulikzylinder (13) bringen eine sehr hohe Kraft auf, so dass die Fräser (5) mit Sicherheit vom Kegelzapfen (4) getrennt werden. Der Hub der Abdrückzylinder (13) ist sehr gering, so dass nur ein Lösen der Kegelverbindung eintritt und kein großer Druck auf den Roboterarm (2) entsteht. Für jeden Fräser (5) sind im Magazin (6) zwei Abdrückzylinder (13) vorhanden, so dass ein symmetrisches Abdrücken gegeben ist.

Gemäß Anspruch 10 ist dargelegt, dass das Magazin (6) stationär angeordnet ist und der Roboterarm (2) den Kegelzapfen (4) in die stationär gehaltene Kegelbohrung (8) mit Kraft eindrückt und die Verjüngung der Kegel (4,8) so gewählt ist, dass eine Kraft- und/oder reibschlüssige Verbindung entsteht.

Gemäß Anspruch 11 ist die Kegelverbindung so gestaltet, dass keine zusätzlichen Mitnehmer erforderlich sind, sondern allein durch die Kontaktflächen der Kegel eine feste und betriebssichere Verbindung entsteht.

### Bezugszeichenliste:

- 1: Schwenkachse
- 2: Roboterarm
- 3: Drehantrieb
- 4: Kegelzapfen
- 5: Fräser
- 6: Magazin
- 7: Roboter
- 8: Kegelbohrung
- 9: externe Kraft
- 10: Abdrückvorrichtung
- 11: Nut
- 12: Bund
- 13: Abdrückzylinder
- 14: Kreisringfläche

## Patentansprüche

1. Verfahren für das Wechseln von Fräsern an einem Industrieroboter, wobei sich an der Schwenkachse (1) des Roboterarmes (2) mindestens ein Drehantrieb (3) befindet auf dem ein Kegelzapfen (4) zentrisch befestigt ist, und mindestens zwei Fräser (5) vorhanden sind und ein Magazin (6) vorhanden ist, und dass zum Ankuppeln des Roboterarmes (2) an den Fräser (5) der Kegelzapfen (4) in die Kegelbohrung (8) des Fräsers (5) gedrückt wird, **dadurch gekennzeichnet, dass** zum Entkoppeln der Kegelzapfen (4) und die Kegelbohrung (8) durch eine externe Kraft (9), die vom Magazin (6) ausgeht, auseinander gedrückt werden.

2. Verfahren nach Anspruch 1,
**dadurch gekennzeichnet,**
**dass** der Kegelzapfen (4) aus der Kegelbohrung (8) gelöst wird und danach der Roboterarm (2) den Kegelzapfen (4) nach unten herausfährt.

3. Verfahren nach einem der Ansprüche 1 und 2
**dadurch gekennzeichnet,**
**dass** der Drehantrieb (3) elektrisch und / oder hydraulisch angetrieben wird und das Ankoppeln in jeder Drehwinkelstellung des Kegelzapfen (4) erfolgt.

4. Verfahren nach einem der Ansprüche 1 bis 3
**dadurch gekennzeichnet,**
**dass** die Übergabe des Fräsers (5) in das Magazin (6) durch eine in etwa horizontale Bewegung erfolgt und das Herausfahren des Kegelzapfens (4) aus der Kegelbohrung (8) in etwa vertikal nach unten erfolgt.

5. Verfahren nach einem der Ansprüche 1 bis 4
**dadurch gekennzeichnet,**
**dass** die Kegelverbindung selbsthemmend ist (Morsekegel) und bei Beginn des Fräsvorgangs der Roboterarm (2) so bewegt wird, dass der Kegelzapfen und die Kegelbohrung zusammen gedrückt werden.

6. Verfahren nach einem der Ansprüche 1 bis 5
**dadurch gekennzeichnet,**
**dass** der Fräser (5) und die mit dem Fräser (5) rotierenden Teile rotationssymmetrisch sind.

7. Vorrichtung für das Wechseln von Fräsern (5) an einen Industrieroboter (7), insbesondere zur Durchführung des Verfahrens nach dem Anspruch 1 bis 9, wobei auf der Schwenkachse (1) des Roboterarmes (2) ein elektrischer und / oder hydraulischer Drehantrieb (3) angeordnet ist und darauf ein Kegelzapfen (4) rotationssymmetrisch befestigt ist und mindestens 2 Fräser (5) mit dazu passenden Kegelbohrungen (8) vorhanden sind und für die Fräser (5) ein Magazin (6) vorhanden ist **dadurch gekennzeichnet, dass** am Magazin (6) Abdrückvorrichtungen (10) angeordnet sind.

8. Vorrichtung nach Anspruch 7
**dadurch gekennzeichnet,**
**dass** das Magazin mindestens eine Nut (11) und der Fräser (5) einen Bund (12) aufweist und der Bund (12) mit Spiel in die Nut (11) passt.

9. Vorrichtung nach Anspruch 7 oder 8
**dadurch gekennzeichnet,**
**dass** das Magazin (6) hydraulische Abdrückzylinder (13) aufweist, die beim Ausfahren auf die Kreisringfläche (14) drücken und der Hub der Abdrückzylinder (13) sehr gering ist.

10. Vorrichtung nach einem der Ansprüche 7 bis 9
**dadurch gekennzeichnet,**
**dass** das Magazin (6) stationär angeordnet ist und der Roboterarm (2) den Kegelzapfen (4) in die Kegelbohrung (5) mit Kraft hinein drückt und dass die Kegelverjüngung so gewählt ist, dass eine Kraft und / oder reibschlüssige Verbindung entsteht.

11. Vorrichtung nach einem der Ansprüche 7 bis 10
**dadurch gekennzeichnet,**
**dass** die Kegelbohrungen (8) und der Kegelzapfen (4) rotationssymmetrisch sind und beim Ankuppeln der Kontakt nur an den Kegelflächen besteht und keine zusätzlichen Mitnehmer vorhanden sind, die das Verdrehen des Kegelzapfens (4) in der Kegelbohrung (5) verhindern würden.

## Claims

1. Method for changing milling cutters on an industrial robot, wherein the pivot axis (1) of the robot arm (2) is fitted with at least one rotary actuator (3) on which a cone point (4) is centrally mounted, and wherein at least two milling cutters (5) and a magazine (6) are provided, and wherein the cone point (4) is pushed into the conical bore (8) of the milling cutter (5) to couple the robot arm (2) to the milling cutter (5),
**characterised in that**
the cone point (4) and the conical bore (8) are pushed away from each other by an external force (9) arising from the magazine (6) for uncoupling.

2. Method according to claim 1,
**characterised in that**
the cone point (4) is released from the conical bore (8), whereupon the robot arm (2) moves the cone point (4) out in a downward direction.

3. Method according to claim 1 or 2
**characterised in that**
the rotary actuator (3) is driven electrically and/or hydraulically, and **in that** the coupling action is performed in any rotary angle position of the cone point (4).

4. Method according to any of claims 1 to 3
**characterised in that**
the transfer of the milling cutter (5) into the magazine (6) involves an approximately horizontal movement and the cone point (4) moves out of the conical bore (8) in an approximately vertical downward direction.

5. Method according to any of claims 1 to 4
**characterised in that**
the cone connection is self-locking (Morse cone), and **in that** the robot arm (2) is, at the start of the milling operation, moved in such a way that the cone point and the conical bore are pushed together.

6. Method according to any of claims 1 to 5
**characterised in that**
the milling cutter (5) ant the parts rotating with the milling cutter (5) are rotationally symmetric.

7. Device for changing milling cutters (5) on an industrial robot (7), in particular for carrying out the method according to claims 1 to 9, wherein the pivot axis (1) of the robot arm (2) is fitted with an electric and/or hydraulic rotary actuator (3) on which a cone point (4) is mounted in a rotationally symmetric manner, and wherein at least two milling cutters (5) with matching conical bores (8) are provided and a magazine (6) is provided for the milling cutters (5),
**characterised in that**
ejecting devices (10) are provided on the magazine (6).

8. Device according to claim 7,
**characterised in that**
the magazine has at least one groove (11) and the milling cutter (5) has a collar (12), and **in that** the collar (12) fits into the groove (11) with play.

9. Device according to claim 7 or 8,
**characterised in that**
the magazine (6) comprises hydraulic ejecting cylinders (13) which, when extending, apply pressure to the annulus surface (14), and **in that** the stroke of the ejecting cylinders (13) is very small.

10. Device according to any of claims 7 to 9,
**characterised in that**
the magazine (6) is arranged to be stationary and the robot arm (2) pushes the cone point (4) into the conical bore (5) with force, and **in that** the cone taper is chosen such that that a non-positive and/or frictional connection is created.

11. Device according to any of claims 7 to 10,
**characterised in that**
the conical bores (8) and the cone point (4) are rotationally symmetric, and **in that**, in the coupling process, contact involves the conical surfaces only and there are no additional drivers which would prevent the twisting of the cone point (4) in the conical bore (5).

## Revendications

1. Procédé de changement de fraises sur un robot industriel, dans lequel au moins un entraînement rotatif (3) se situe sur l'axe de pivotement (1) du bras de robot (2), sur lequel un tenon conique (4) est fixé de manière centrée, et au moins deux fraises (5) sont présentes et un magasin (6) est présent, et le tenon conique (4) est pressé dans le perçage conique (8) de la fraise (5) pour le couplage du bras de robot (2) à la fraise (5), **caractérisé en ce que** le tenon conique (4) et le perçage conique (8) sont éjectés pour le découplage par une force externe (9) qui part du magasin (6).

2. Procédé selon la revendication 1, **caractérisé en ce que** le tenon conique (4) est détaché du perçage conique (8) et le bras de robot (2) déplace ensuite le tenon conique (4) vers le bas.

3. Procédé selon l'une quelconque des revendications 1 et 2, **caractérisé en ce que** l'entraînement rotatif (3) est entraîné par voie électrique et/ou hydraulique et le couplage est effectué dans chaque position d'angle de rotation du tenon conique (4).

4. Procédé selon l'une quelconque des revendications 1 à 3, **caractérisé en ce que** la fraise (5) est remise dans le magasin (6) par un mouvement à peu près horizontal et le tenon conique (4) est déplacé hors du perçage conique (8) à peu près verticalement vers le bas.

5. Procédé selon l'une quelconque des revendications 1 à 4, **caractérisé en ce que** la liaison conique est autobloquante (cône Morse) et le bras de robot (2) est déplacé au début du processus de fraisage de sorte que le tenon conique et le perçage conique soient pressés ensemble.

6. Procédé selon l'une quelconque des revendications 1 à 5, **caractérisé en ce que** la fraise (5) et les parties tournant avec la fraise (5) présentent une symétrie de rotation.

7. Dispositif de changement de fraises (5) sur un robot industriel (7), en particulier pour la réalisation du procédé selon l'une quelconque des revendications 1 à 9, sachant qu'un entraînement rotatif (3) électrique et/ou hydraulique est disposé sur l'axe de pivotement (1) du bras de robot (2) et un tenon conique (4) est fixé dessus de manière symétrique en rotation et au moins deux fraises (5) avec des perçages coniques (8) adaptés sont présentes et un magasin (6) est présent pour les fraises (5), **caractérisé en ce que** des dispositifs d'éjection (10) sont disposés sur le magasin (6).

8. Dispositif selon la revendication 7, **caractérisé en ce que** le magasin présente au moins une rainure (11) et la fraise (5) présente un collet (12) et le collet (12) s'adapte avec du jeu dans la rainure (11).

9. Dispositif selon la revendication 7 ou 8, **caractérisé en ce que** le magasin (6) présente des cylindres d'éjection hydrauliques (13) qui pressent lors de la sortie sur la surface annulaire (14) et la course des cylindres d'éjection (13) est très faible.

10. Dispositif selon l'une quelconque des revendications 7 à 9, **caractérisé en ce que** le magasin (6) est disposé de manière stationnaire et le bras de robot (2) presse le tenon conique (4) dans le perçage conique (5) avec force et **en ce que** le rétrécissement conique est choisi de sorte qu'une force et/ou une liaison par friction apparaisse.

11. Dispositif selon l'une quelconque des revendications 7 à 10, **caractérisé en ce que** les perçages coniques (8) et le tenon conique (4) présentent une symétrie de rotation et le contact n'existe que sur les surfaces coniques lors du couplage et aucun entraîneur supplémentaire n'est présent, lequel empêcherait la rotation du tenon conique (4) dans le perçage conique (5).
